# EUROPEAN PATENT SPECIFICATION

(11) **EP 1 379 048 B1**
(45) Date of publication and mention of the grant of the patent: **01.03.2006**
(21) Application number: 02425429.4
(22) Date of filing: 01.07.2002
(51) Int. Cl.: H04L 29/06, H04L 12/18, H04L 12/56, H04N 5/00, H04Q 7/38

(54) **System for and method of providing mobile live video multimedia services**
System und Verfahren zur Bereitstellung von mobilen multimedialen Dienstleistungen mit Echtzeitvideoübertragung
Système et procédé de fourniture de services multimédia mobiles de transmission video en direct

(43) Date of publication of application: 07.01.2004
(73) Proprietor: Siemens Mobile Communications S.p.A., 20126 Milano (IT)
(72) Inventor: Rosina, Giancarlo, 20018 Sedriano (IT)
(74) Representative: Giustini, Delio

(56) References cited:
- EP-A- 1 061 712
- WO-A-00/22860
- WO-A-01/26323
- WO-A-01/98854
- WO-A-02/14990
- US-A1- 2002 057 340
- LEISENBERG M ET AL: "MOMENTS - MULTIMEDIA SERVICES IN A NARROW-BANDWIDTH CELLULAR ENVIRONMENT" PROCEEDINGS OF THE EUROPEAN CONFERENCE ON MULTIMEDIA APPLICATIONS,SERVICES AND TECHNIQUES, XX, XX, 26 May 1998 (1998-05-26), pages 246-259, XP008006390
- KRUIZINGA E: "Co-operative Video Gophers" IEE COLLOQUIUM ON DEVELOPMENTS IN PERSONAL SYSTEMS, 23 June 1995 (1995-06-23), pages 5/1-5/3, XP001119796

## Description

### Field of the invention

The present invention relates to transmission of multimedia information and more particularly it concerns a system for and a method of providing live multimedia services by use of mobile communication units.

### Background of the invention

In recent years companies, governments and other institutions increasingly turn to digital networks to distribute live and/or pre-recorded audio-visual (multimedia) information for education, presentation, entertainment etc. applications. Many existing systems are based on the use of the Internet to make viewers see the images on their PC. Real time observation of ongoing events by the viewers is provided for, so that such systems offer a service that can be referred to as "Live Navigation".

Several systems of that kind are known in the art.

WO-A 99/12349 discloses a system in which video information generated by a plurality of sources is transferred to a web site, which may be accessed by a plurality of users. A video server handles requests from the users and supplies the users with the selected images. The server is also arranged to receive commands from the users, giving the users a perception of source control.

US-A 5 930 473 discloses a system for use in a network including source clients and viewer clients connected to one or more shared transmission media. A video server is connected to one of the transmission media and is operative to control the broadcast and storage of multiple live or previously stored video streams. The system provides either for continuously broadcasting a video stream from a source client to a number of viewer clients, or for sending a multicast directory to each of a plurality of viewer clients, wherein the multicast directory indicates to a particular viewer client which of a number of video programs are available for broadcast.

Similar applications can be viewed at some web sites like http://www.ireland. com/dublin/visitor/live:view or http://www.fujiint.co.uk/street/: a web camera mounted at a certain location transmits continuously updated images of what is happening there.

Those known Internet-based systems are typically designed for stationary environments. Even if a plurality of sources may be provided at different locations, only the service provider can decide where the sources are to be located and what they are to transmit. The roles of the sources and the viewers are essentially fixed roles. The sources are chosen according to a certain logic (commercial, educational and so on) and the typical viewer is at home or at work or is listening to a lesson. Under such conditions, exchanging the roles of the sources and the viewers is not of practical interest. Thus, the known systems are scarcely flexible.

An example of multimedia video communication system exploiting source mobility is disclosed in WO-A 01/72043. The sources in the system comprise a camera producing analogue audio and video signals, which are converted into digital data by a laptop computer. The computer sends the digital data stream via an ISDN modem and a portable satellite communication device to a remote server, and the server transmits the data stream to a plurality of viewers over the Internet.

This system is mainly designed for professional applications (e.g. for use by reporters and the like). Mobility is a feature of the sources only and, again, the roles of the sources and the viewers cannot be mutually exchanged. No choice by the users seems possible. Moreover a source requesting use of a camera, a computer and a satellite communication device is rather cumbersome, heavy and uncomfortable to handle.

WO-A-01/98854 discloses a system for allowing and facilitating web surfing to mobile users. The system comprises a communication network, a plurality of mobile users that can view or play multimedia information, sources of information, and a server (or servers) connected to the communication network and allowing access of the users to the information offered by the web. A user position identification allows providing the user with information local to its current position. The users cannot act as sources.

US 2002/057340 A discloses a system for monitoring remote objects or persons: A controller can receive images of an object or a person through a communication network from cameras located at fixed positions, and can also receive through the network position information generated by a communication unit associated to the monitored object or person. Only the controller can view the images of the object or person of can decide which object or person is to be monitored and where is to be monitored.

Leisenberg M. et al: "MOMENTS - Multimedia Services in a Narrow-Bandwidth Cellular Environment" generally discloses a platform for Providing advanced services to the users of a cellular network. The platform could be suitable for supporting a Live Video Navigation service in which users could see images generated by other users. Only the general categories of procedures and services feasible with the platform are however disclosed.

EP-A-1 061 712 discloses a system with a communication network, a server connected to the network, information sources forwarding the information to the server and viewers of the information. In the embodiment in which images are sent by the sources to travelling viewers, the images are sent to the server and then forwarded to requesting viewers for being played on the respective communication units, and the system can detect the source position and store geographical information about the sources. The document discloses the features of the preamble of the independent claims. This known system is however scarcely flexible, since the sources are fixed cameras, so that a user has not the possibility of acting as source and the source and viewer roles are fixed and cannot be mutually exchanged; moreover the information accessible to the viewers always depends on the viewer's position.

Development of new mobile communication units with new or improved hardware components like cameras, GPS (Global Positioning System) receivers or other means for location support, improved screens and so on will offer the possibility for users to get really in touch with the rest of the world. Those new mobile units exploit existing telecommunications infrastructures and allow in particular setting up a real Live Video Navigation service (LVN). The service is based on the idea that, having many eyes around the world (e.g. cellular phones with cameras), willing to share their video images, everyone can use them to navigate wherever he/she wants to be.

Thus, the aim to the invention is to provide a system for and a method of providing multimedia services by use of mobile communication units, which system and method are compatible with the already existing state of the art, and yet are able to take full advantage of the features of the new mobile units, thereby overcoming the drawbacks of the Internet-based systems.

### Summary of the invention

This aim is achieved by a system as claimed in claim 1 and a method as claimed in claim 14.

Source users and viewer users take part in the service. Everyone can register himself/herself as a potential source with the service provider and everyone interested in viewing images recorded by other people can subscribe the service and access a specific live video navigation (LVN) service number to select a preferred user as a video source (for example, a friend who is on trip or holiday) or to select a place in the world where he/she would like to be and then find a user located in that place acting as video source.

Yet, any user equipped with a mobile unit provided with a camera and a screen can indifferently be a source client or a viewer client, so that a great flexibility is achieved. When acting as a viewer, a user will obviously have to pay for the service whereas, when acting as a source, the user could be remunerated for sharing the recorded images with the other users. This could make the users more willing to subscribe the service because they can earn money or even invent a new job.

### Brief description of the drawings

The invention will be now described in more detail with reference to the accompanying drawings, in which:
- Fig. 1 illustrates the architecture of a system for providing a live navigation service to users connected to a public land mobile network;
- Fig. 2 illustrates the architecture of a system for providing a live navigation service to users connected to different kinds of communications networks;
- Fig. 3 is a block diagram of the video server and;
- Figs. 4 to 7 are diagrams of the procedures followed the in live navigation service.

### Description of the preferred embodiment of the invention

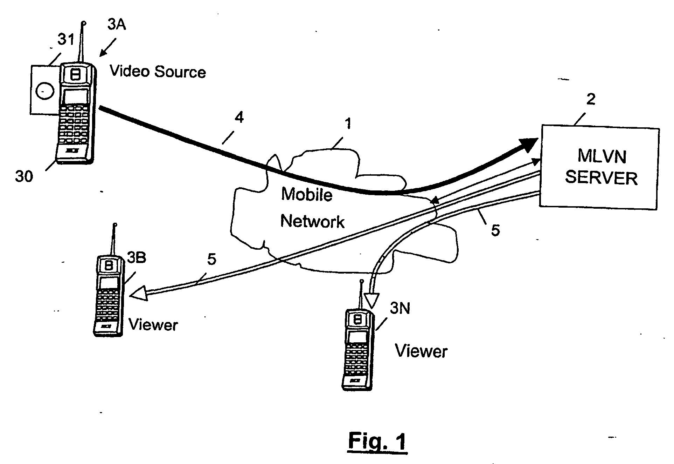

Fig. 1 shows a system for providing a LVN service based on a mobile communication network 1, like a public land mobile network (PLMN), which can be a typical, but not exclusive, support for this service. The service set up by the invention will therefore be referred to as Mobile Live Video Navigation (MLVN).

The system comprises a MLVN server 2, entrusted with the service management, and a plurality of users 3A, 3B...3N, which are provided with mobile communication equipment for access to server 2 through network 1. The user equipment is shown for sake of simplicity as a cellular phone.

Two categories of users exist: "video sources" (e.g. user 3A) and "viewers" (users 38...3N). Sources 3A record images by means of a camera 31, advantageously integrated into or connectable to cellular phone 30 for transmission of the recorded images to server 2. Viewers 3B...3N are equipped with suitable displays, which in the simplest case could be the displays of the cellular phones.

Associating a mobile communication unit like a cellular phone with a camera is well known in the art. For instance, EP-A 975 132 discloses a cellular phone associated with the camera through a disconnectable connection. US-A 6 085 112 discloses a mobile unit integrating a mobile phone, a camera, a screen and a computer. Since user terminals of that kind have the capability of both recording and displaying images, it is clear that the user can play both roles of source and viewer, depending on its wishes and the circumstances. Thus, a very flexible system is provided.

Of course, user equipment based on a cellular phone allows readily transmitting an audio comment together with the images. Thus, the terms "video", "images"... are to be intended as including also an audio component, so that the "viewers" act indeed as "multimedia players".

Sources 3A send the picked-up images to server 2, which makes such images available to the interested viewers. The connection between sources 3A and viewers 38...3N will generally be a point-to-multipoint connection, since multiple viewers can choose and share the same source. Server 2 can also provide for long-term storage of the received images. -

The video sources have to be compensated for having agreed to share the results of their activity with other people, while viewers 3B...3N have to pay. So, the service provider should keep records of the debits/credits of the subscribers. The possibility of earning money, by simply putting at disposal the time and the competence of managing a video camera, can encourage people to subscribe the service.

Users' mobility can be exploited to permit viewers not only to request connection to a specific source, wherever the source might be, but also to look for sources present in a certain area. In that second case, it is essential that geographical information about the source positions be made available to server 2.

Different solutions can be envisaged for collecting and managing the geographical information.

A first (and the simplest) solution could be leaving the task of locating sources 3A to the mobile network operator. Actually, mobile network operators have available the technical means to do this and they often already offer a location service. Of course, an agreement is to be made between the network operator and the service provider in order server 2 can access the operator's geographical database to get the information concerning the users' locations.

Another solution could be to provide server 2 with own tracking means capable of detecting the users' positions; the location information would then be sent to a location or geographical database owned by the service provider.

As a further alternative, the service subscribers should be equipped with GPS equipment or the like: thus, the mobile units can send the information directly to server 2, which stores it in a proper data base, as before.

An additional solution could be to supply server 2 with users' position using massages of any kind sent by the viewers, including short service messages (SMS).

All users willing to use MLVN service have to make a subscription with the MLVN Service Provider, who stores their data for authentication and billing. The subscription represents also an indirect permission for the service provider to manage the subscribers' location data, which normally are regulated by privacy rules.

After this initial "service subscription", the users have to perform a "mode subscription" whenever they access the service, depending on whether they want to act as sources or viewers. In case of stationary sources, if any, the "mode subscription" could be automatically linked to the activation of the source.

In case of viewers' navigation in a given area, different conditions can occur. If subscribers who have made a mode subscription as sources ("active sources") are moving in that area, this will result from information displayed by the server on the viewer's screen or display when the viewer becomes connected to the service. Then the viewer can choose the right source and request connection in the same manner as when he/she initially requests connection to a specific source.

If no source is active in the area, MLVN server 2 has to access the geographical database and get the information about users moving in that specific area even if idle and not yet subscribed as sources. At that point, server 2 can send text messages to such users informing them about the existence and the number of viewers who are looking for a source in that position. The users who receive that message can agree to become video sources and start a mode subscription as sources. Consequently, a connection is immediately set up between that source and those viewers.

As said, sources 3A are to be paid and viewers 3B...3N are to pay. For instance, video sources could be paid proportionally to the time spent by viewers to see their recording. If no viewers are there, no payment will be done. In this respect, it is very useful to transmit, on a periodic base, the number of viewers to source 3A (optional feature), so that source 3A can understand how many people are using the service and how much money he/she is earning. The service provider revenues will depend on the number of viewers. Of course, billing will also take into account the service provider's cost for leasing communication lines from network operators.

The MLVN service could eventually represent an alternative to television, by offering the possibility of choosing between regular TV channels and other sources. Of course, an actual competition between TV channels and sources of the MLVN service will exist provided the quality of the images transmitted/received in the MLVN service is satisfactory, In general we can expect that the MLVN service can have quality limitations, due to the fact that the sources are not professional and they may not care, for instance, about the audio registration, but they can offer a wider selection about places and events which are really requested by viewers.

The aspects concerning the property of the images are also important. The property belongs in principle to sources 3A that, by activating the subscription procedure, agree to share the recorded images in real time with other people.

As to long-term storage, sources 3A may indicate, when starting image transmission, whether they want to keep the long-term property. In this case sources 3A have to pay for storage and can decide later how to manage the public access to that file and whether and how to resell it to the service provider. If a source does not want to pay for storage, he/she has to give up his/her property rights, which are automatically transferred to the service provider, who can freely exploit the stored images.

Viewers 3B...3N too might ask for storage but in no case they will get the property of the images. The images simply stay in the store and are available only for personal use. All users who have done the request could share the costs of storage by viewers.

Storage may take place also on request by the service provider. In that case, the source can keep the property and can be compensated for by the system, like in case of live transmission.

Network 1 will be transparent to the service according to the concept of "bearer services", this term denoting the ability to set up a service with specific requirements in a single network or through different networks. A number of different bearer services are already standardised in mobile networks as far as voice, circuit-switched data or packet-switched data transmission are concerned, each service having certain requirements as to time delay, transmission rate, target BER (bit error rate). E. G. real time transmission is already ensured for voice and circuit-switched data, whereas for packet-switched services, like GPRS, which has recently been introduced in 2nd generation networks, the typical requirement for delivery time is Best Effort, that means no true or not guaranteed time delay. Third generation systems would provide real time performance also for packet services. Also IETF and ISO are standardising new real time applications suitable for Internet, like MPEG4 for video streaming.

To support MLVN, the following performance and resources are required of network 1:
- between sources 3A and MLVN server 2: use of an asymmetric data channel carrying in uplink the video signal and in downlink a low rate signalling and control channel. This uplink video signal is paired with a bi-directional audio channel (only uplink is normally used for audio, but a unidirectional channel is probably not standardised and maybe the downlink direction can be used between a human operator at MLVN server 2 and the operator/user of source 3A). It is important to note that video and audio can be carried by two independent channels (this could fit to circuit switched connections) or linked together (this could be the best solution in packet mode). The transmission has to work in real time or streaming mode;
- between MLVN server 2 and viewers 3b, 3n: the same as described in the previous point, but with reverse direction and different signalling, as will be better disclosed hereinafter.

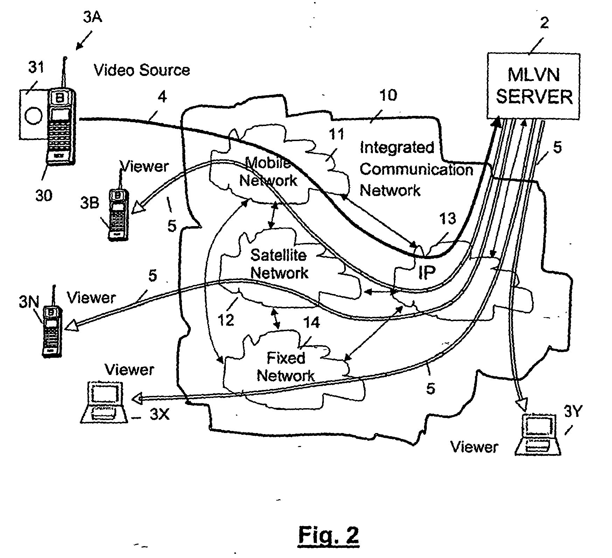

Fig. 2 shows a generalisation of the system shown in Fig. 1. The same reference numerals indicate elements shown also in Fig. 1. Network 10 is now an integrated communication network: thus users 3 can access the MLVN service through a mobile network 11 and/or a satellite network 12 and/or an IP-based network 13 and/or a fixed network 14, the different networks 11 to 14 being connected together. In the case of integrated network 10, viewers 3B...3Y could obviously use other equipment than a cellular phone, as indicated by laptops for users 3X, 3Y. Use of communication units like that disclosed in US-A 6 085 112 provides for interchangeability of the source/viewer roles for the concerned users also in an integrated network like network 10.

Also stationary sources could be envisaged, and such sources too could be associated with information about geographical position: Thus, viewers' navigation in a given area can also result in the choice of images from a stationary source.

The communication channels for the MLVN service are shown in Figs. 1 and 2 by thick-line arrow 4 for the source-to-server direction and by double line arrows 5 for server-to-viewer direction. The drawings merely intend to highlight the network "transparency" to the service, and the actual connections between network 1, server 2 and users 3 are not expressly shown (apart from connection between network 2 and server 3 and connection between each of the different subnetworks 11 to 14, in the case of integrated network 10).

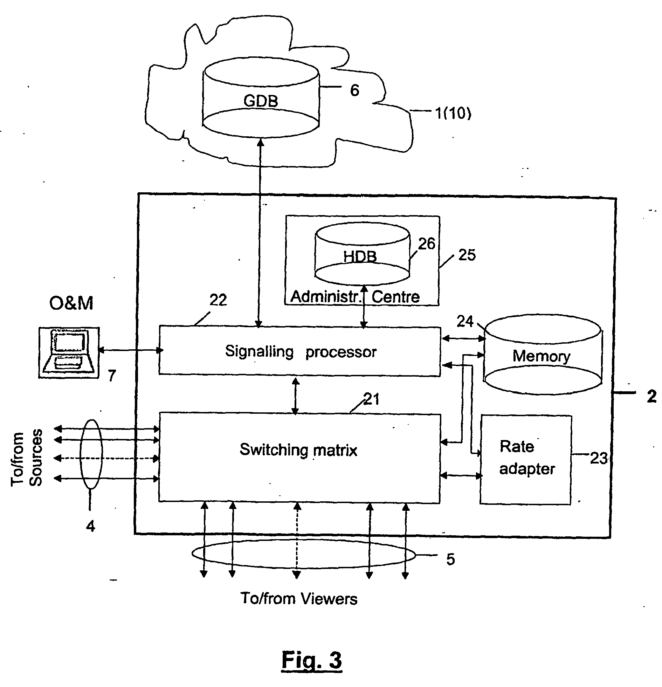

Fig. 3 shows a possible structure of server 2.

Server 2 will be owned and managed by a service provider who rents a number of communication lines from some network operator. Server 2 is to manage the signalling part necessary for setting up the MLVN connection and to forward the video signals coming from one source through line 4 to a multiplicity of viewers through lines 5. Signalling from and to sources 3A and from and to viewers 3B...3Y is supposed to be conveyed by the same lines 4, 5 as the video signals. The signalling processing and the information broadcast functions are normally available in modem IP routers and are functionally represented by switching matrix 21 and signalling processor 22.

It is to be taken into account that, when the service will be operating, many kinds of user terminals will be commercially available, having e.g. different camera resolutions and different displays; moreover, different kinds of networks support different bandwidths. So, server 2 should include means 23, here referred to as rate adapter, connected with the switching matrix 21 and signalling processor 22 and intended to match the different user's terminal performance and the available/requested bearer throughputs, taking into account the network features. In the most advanced version, rate adapter 23 could operate in adaptive manner: that is, techniques similar to AMR (Adaptive Multi Rate) used for voice services in mobile communications could be used also for the video broadcast in MLVN service.

Clearly, the communication set-up phase has to include a rate negotiation between server 2 and video sources 3A and -between server 2 and the different viewers 3B...3Y. For instance, if source 3A is a high resolution source, the viewer can ask the same resolution or simply view with a low resolution if he/she has a small display or the network allows only low data rate throughput. Not all possibilities are guaranteed: for instance, if source 3A is a low-resolution video, it is not meaningful to give the viewer a wideband resource. Billing could take into account also the used bandwidth.

As said before, server 2 has also the capability of long-term storage of the images sent by sources 3A. Thus, switching matrix 21 is also connected to a memory device 24, which will be controlled by signalling processor 22.

The MLVN server must also include an administration centre 25, including a home data base (HDB) 26, giving the possibility to subscribe, authenticate and charge/compensate users.

Signalling processor 22 must also give access to a geographical data base (GDB) 6, for service provision based on geographical criteria, as discussed above. The exact location of the geographical database within the system depends on the manner in which geographical information is collected. By way of example, database 6 is here shown as being part of network 1 or 10.

Of course, an operator (schematised by computer 7) may act on server 2 for all operation and maintenance tasks.

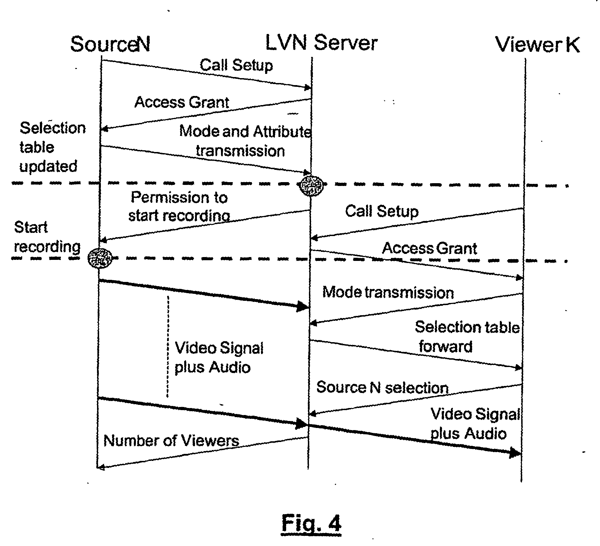

The operation of the mobile live video navigation system according to the invention will now be described, referring also to the diagrams of Figs. 4 to 7.

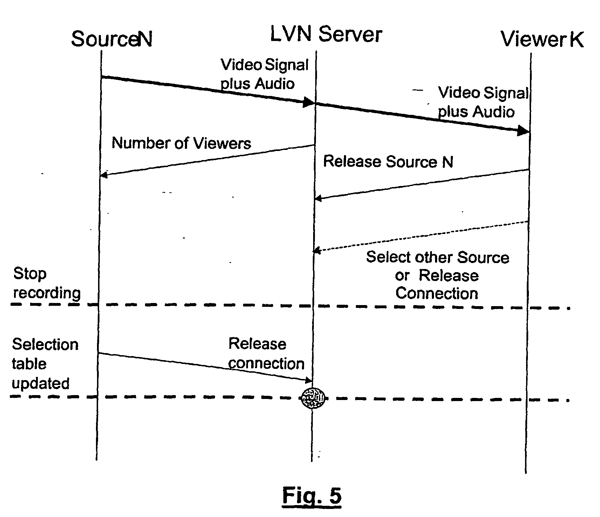

Figs. 4 and 5 refer to the case in which the access to the service is requested by a source that is willing to share the images picked up with viewers. The user calls the MLVN server and specifies that he/she intends to access the server as a video source. Server 2 will activate a corresponding mode subscription and grant access to the service. Together with the mode subscription, the video source transmits a set of parameters, or "Attributes", to server 2, giving information about the video-recording context: The attributes may include:
- geographical position of source 3A when a GPS receiver or a location service is available;
- information about the subject matter of recording which is being performed, for instance FIXED INSTALLATION, WALKING, FLYING, GOING WITH CAR, CLIMBING ON MOUNTAINS, SEEING LANDSCAPE ... (this can be sent as a short text message digitised by the user with a manual procedure).

Other information is to be sent to the MLVN Server, like willingness to keep or leave the property rights about the future use of images and need to store the recorded images for subsequent retrieval.

Server 2, upon receiving the above information, will build a record for that source in a selection table or directory, which will be displayed to viewers 3B...3Y to allow navigation. The selection table could be for instance as follows:

**SELECTION TABLE**

| SERIAL # OF ACTIVE SOURCES | SOURCE Tel. Number | SOURCE Name or Nickname | GEOGRAPHICAL POSITION | ATTRIBUTE(S) |
|---|---|---|---|---|
| 1 | (+39) 02 222222 | Jack | 48° 37' 10" N 17° 20' 32" E | Flying on helicopter over Garda lake |
| 2 | (+39) 02 333333 | Piazza Duomo | Not available | Fixed installation in Piazza del Duomo in Milan |
| 3 | (+39) 02 444444 | Not available | 16° 00' 10" N 8° 11' 33" E | Not available |
| ..... | ................... | ................... | ................... | ................... |
| N | ................... | ................... | ................... | ................... |

The more this table is filled, the more the selection is effective. Some field, however, can be missed, like geographical position or attributes.

After having created or updated the selection table, server 2 sends source 3A a permission to start recording, and source 3A starts sending its images with associated audio, if any, to server 2.

From that moment, a viewer can call the active video sources in every moment and the acceptance of the call is automatic. No further dialogue of the source with server 2 is required. While transmission is in progress, server 2 periodically informs each source 3A of the number of viewers tuned to it.

At the viewer side, the access to server 2 takes place in the same manner as for sources 3A. The users have however to indicate their intention to act as viewers, and a corresponding mode subscription can be started for them. Once access has been granted, the selection table is shown to the viewer, who consequently will choose source 3A of interest. This will be made in any of the known manners compatible with the kind of user's equipment (cellular phone, laptop computer...). At that moment, the viewer will start receiving the images and the audio signals.

While a viewer is "tuned" to a specific source, other viewers can ask to look at the same images, by the already described procedure. This does not affect in any manner the operation of the source and the other viewers.

Source 3A can stop recording at any moment and release connection. Upon release by a source, server 2 will update the selection table by deleting the relevant record.

Also, while a source 3A is transmitting, any of viewers 3B...3Y tuned to it can stop seeing the images of that source and choose another source or release the connection to server 2.

Releases by sources 3A and viewers 3B...3Y are wholly uncorrelated.

The presence of geographical database 6 allows viewers 3B...3Y to navigate in a certain area, instead of requesting connection to a specific source. In this case, the viewer takes the initiative. If sources are active in the area, this can be seen in the selection table, which, as discussed above, contains geographical information about all or a number of sources 3A: viewers 3B...3Y proceed as above, by requesting connection to the source of interest.

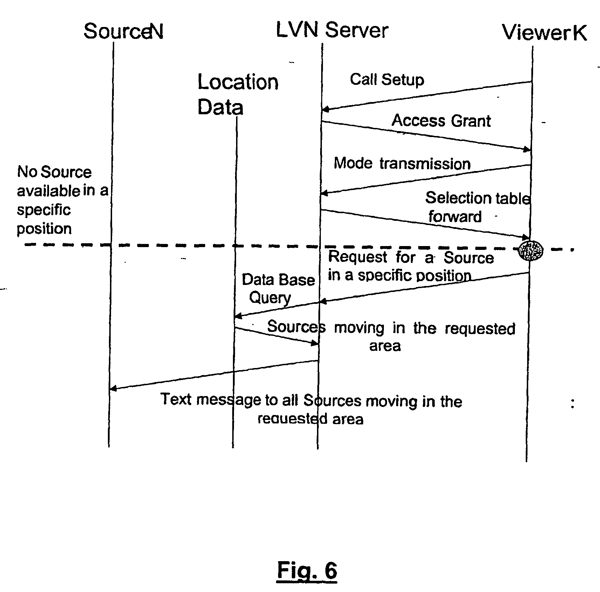

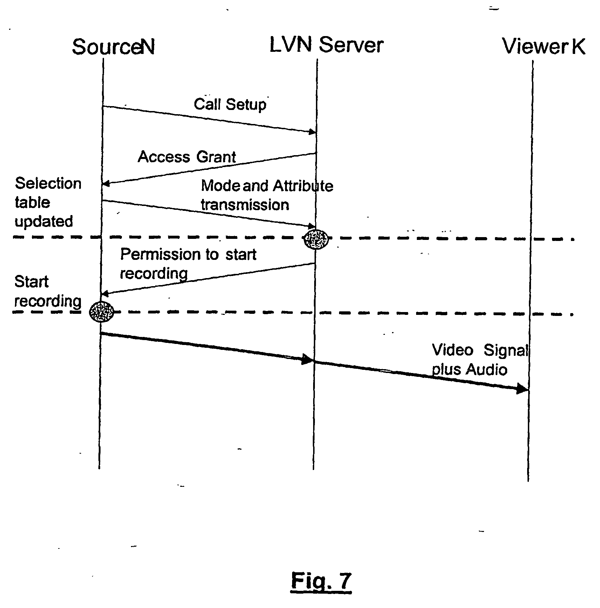

If no source is active in the area (see Figs. 6 and 7), the viewer, after having realised that no record for sources in the area exists in the selection table, can send a request to server 2 for connection to a source in a specific position. Server 2 has therefore to access the geographical database and get the information about users moving in that specific area. Note that if the geographical database is that of a network operator providing for a location service, the server can receive location information about all users who have made a service subscription. MLVN server 2 then will send text messages to the potential sources informing them about the existence and the number of viewers who are looking for a source in that position. The users who receive that message can set up a connection to the server and start a mode subscription as sources, which are immediately transformed into a connection between that source and those viewers.

Release will take place as disclosed for the previous mode of operation.

It is self evident that the above description-is given only by way of non limiting example and that changes and modifications are possible without departing from the scope of the invention, as defined in the appended claims.

One of these modifications is to equip the viewers with camera producing analogue audio and video signals, to be converted into digital data by an A/D converter and sent to the server via a communication network.

## Claims

1. A system for providing live multimedia services, comprising:
- a communication network (1; 10, 11, 12, 13, 14) to which a plurality of users (3A...3Y) have access through respective communication units;
- a server (2) connected to said communication network (1; 10, 11, 12, 13, 14) and arranged to manage the services;
- a plurality of multimedia information sources (3A) connected to said communication network (1; 10, 11, 12, 13, 14) and arranged to forward the multimedia information they generate to the server (2);
- a plurality of multimedia information viewers (3B...3Y), which are a first group of users equipped with communication units having means for receiving from the server (2) and playing requested multimedia information;
- means for detecting the positions of at least part of the sources (3A); and
- a geographical data base (6) for storing information about such positions and accessible to the server (2);
**characterised in that** said sources (3A) include multimedia information generating means associated with communication units of a second group of users, at least part of the users belonging to both groups and having communication units having both said means for generating multimedia signals and said means for receiving and playing the multimedia information, whereby such users can act as sources or viewers in interchangeable manner; and **in that** the communication units of the viewers are arranged to become connected to the server for requesting either information generated by a specific source, or information generated by sources in a specific geographical area, independently of the viewers' positions.

2. A system according to claim 1, **characterised in that** at least a subset of the users capable of acting as sources (3A) is equipped with mobile communication units, and the position detecting means are arranged to detect the position of at least the users in said subset.

3. A system according to claim 1 or 2, **characterised** that the position detecting means are associated with the users.

4. A system according to any preceding claim, **characterised in that** the server (2) includes administration and accounting means (25, 26) arranged to activate a mode subscription as a source or a viewer, respectively, for a user requesting access to the service to transmit or receive, respectively, the multimedia signals, and arranged to determine amounts to be credited to users acting as sources and debited to users acting as viewers.

5. A system according to any preceding claim, wherein said server (2) further includes means (23) for negotiating, at the set up of a connection between a user acting as source (3A) and a user acting as a viewer (3B...3Y), the allotment of resources compatible with the characteristics of the communication units of the connected users and/or the characteristics of the network (1; 10).

6. A system according to claim 5, **characterised in that** said negotiating means (23) are arranged to allot the resources in adaptive manner.

7. A system according to any preceding claim, **characterised in that** said server (2) further includes means (24) for storing the multimedia information forwarded by the sources, said storing means being enabled on request of the source, one or more viewers or the server.

8. A system according to claims 4 and 7, **characterised in that** said administration and accounting means (25, 26) are arranged to determine amounts to be credited or debited to users for the storage.

9. A system according to any preceding claim, **characterised in that** said server (2) comprises signalling processing means (22) arranged, in a first operation mode: to receive requests of access to the service by users (3A) intending to act as sources; to receive requests of access to the service by users (3B...3Y) intending to act as viewers and wishing to receive multimedia information from a specified one of said sources, independently of the viewer position; and connecting means (24) arranged to set up a connection between any of said users acting as sources (3A) and the concerned viewers (3B...3Y).

10. A system according to claim 9, **characterised in that** said administration and accounting means (23) are arranged, when the server (2) receives an access request from a user (3A) intending to act as source, to prepare a record associated with said user and containing at least data identifying the source and information about the content of the multimedia information generated by said source; and to present the records associated with all active sources to the users (3B...3Y) requesting access as viewers, said records including also data about the geographical positions of the active sources, if available.

11. A system according to any of claims 1 to 8, **characterised in that** said server (2) comprises signalling processing means (22) arranged, in a second operation mode: to receive requests of access to the service by users (3B...3Y) intending to act as viewers and wishing to receive multimedia information from sources (3A) located in a specified geographical area, independently of the viewer position; to supply the requesting users with records associated each with an active source (3A) and containing at least information about the source locations and the content of the multimedia information generated by said active sources (3A); and connecting means (24) arranged to either:
- set up a connection between the requesting viewer(s) (3B...3Y) and the source(s) (3A) active in the area of interest, if any active source exists; or
- if no source (3A) is active in the area at the moment of the request, look in said geographical data base (6) for the presence **in that** area of users potentially capable of acting as sources; to send said users a message informing of the existence and the number of viewers wishing to receive multimedia information from that area; and in case any of said user becomes active as a source in response to the received message, to set up the connection between that user and the requesting viewers (3B...3Y).

12. A system according to any of claims 9 to 11, **characterised in that** said administration means (25) are arranged to periodically send to a source (3A), while it is forwarding said multimedia information to viewers (3B...3Y), messages informing the source of the number of viewers (3B...3Y) connected to it.

13. A system according to any preceding claim, **characterised in that** the connections between the sources (3A) and the server (2) include a first asymmetric data channel carrying in uplink the video component of the multimedia information and in downlink a low rate signalling and control channel, and the connections between the server (2) and the viewers (3B...3Y) include a second asymmetrical data channel similar to the first one but operating in opposite direction, the data channels for the video being associated with an audio channel.

14. A method of providing live multimedia services in a system comprising: a communication network (1; 10, 11, 12, 13, 14) to which a plurality of users (3A...3Y) have access through respective communication units; a server (2) connected with the network and managing the services; a plurality of multimedia information sources (3A) connected to said communication network (1; 10, 11, 12, 13, 14); and a plurality of multimedia information viewers (3B...3Y) which form at least a part of said users, the method comprising the steps of :
- generating multimedia information at one or more of said sources (3A);
- forwarding the multimedia information generated by said sources (3A) to the server (2) through the network (1; 10, 11, 12, 13, 14);
- forwarding the multimedia information from the server (2) to one or more multimedia information viewers (3B...3Y) having requested it;
- playing the multimedia information on receiving an playing means of communication units of said requesting viewers (3B...3Y);
- detecting the positions of at least part of the sources (3A); and
- storing information about such positions into a geographical data base (6) accessible to the server (2),
**characterised in that** said generating step is performed through generating means associated with communication units of users capable of acting as said sources; **in that** said generating and playing steps can be carried out at the communication units of at least a set of users which are capable of acting in interchangeable manner as sources or viewers; and **in that** said step of forwarding the information from the server (2) to one or more multimedia information viewers (3B...3Y) having requested it includes either forwarding information generated by a specific source, or forwarding information generated by a source located in a specific area, independently of the viewer's positions.

15. A method according to claim 14, **characterised in that** said detecting step includes detecting the position of at least the users acting as sources and equipped with mobile communication units.

16. A method according to claim 14 or 15, **characterised** that said position detection is carried out by the communication units of users equipped with mobile communication units.

17. A method according to claim 15 or 16, **characterised in that** it further comprises the step of activating a mode subscription to the service as source or viewer, respectively, for a user requesting access to the service to transmit or receive, respectively, the multimedia information, and determining amounts to be credited to subscribers (3A) acting as sources and debited to subscribers (3B...3Y) acting as viewers.

18. A method according to any of claims 14 to 16, **characterised in that** it further comprises a negotiating phase, at the set up of a connection between a source (3A) and the server (2) and between the server (2) and a viewer (3B...3Y), for allotting resources to said connections in a manner compatible with the characteristics of the communication units of the connected users and/or the characteristics of the network (1; 10).

19. A method according to claim 17, **characterised in that** said negotiating phase determines an adaptive allotment of resources to said connections.

20. A method according to any of claims 14 to 19, **characterised in that** it further comprises the step of storing the multimedia information forwarded by one or more sources (3A) into a long-term memory (24), upon request of the source (3A), of one or more viewers (3B..:3Y) or of the server (2).

21. A method according to claim 20, **characterised in that** said storing step includes determining amounts to be credited or debited to the users (3A...3Y) for said storage.

22. A method according to any of claims 14 to 21, **characterised in that** it comprises, in a first operation mode, the steps of: receiving requests of access to the service by users (3A) intending to act as sources; receiving, at the server (2), requests of access to the service by users (3B...3Y) intending to act as viewers in order to receive multimedia information from a specified one of said sources (3A); and setting up a connection between said specified source (3A) and the interested viewers (3B...3Y).

23. A method according to claim 22, **characterised in that**, upon receipt of a request of access to the service by a source (3A), it comprises the steps of: preparing a record associated with said source (3A) and containing at least data identifying the source (3A) and information about the content of the multimedia information generated by it, and presenting the records associated with all active sources (3A) to all users (3B...3Y) requesting access as viewers record includes also data about the geographical positions of the active sources, if available.

24. A method according to any of claims 14 to 21, **characterised in that** it comprises, in a second operation mode, the steps of: receiving requests of access to the service by users (3B...3Y) intending to act as viewers and wishing to receive multimedia information from sources (3A) located in a specified geographical area; supplying the requesting users (3B...3Y) with a directory of the active sources (3A) containing at least information about the source locations and the content of the multimedia information generated by said active sources (3A); and either
- setting up a connection between the requesting viewer(s) (3B...3Y) and the source(s) (3A) active in the area of interest, if any such active source exists; or
- if no source (3A) is active in the area at the moment of the request, looking into the geographical data base (6) for the presence **in that** area of users potentially capable of acting as sources (3A); sending said users a message informing of the existence and the number of viewers wishing to receive multimedia information from that area; and in case any of said user becomes active as source (3A) in response to the received message, setting up the connection between that user and the requesting viewers (3B...3Y).

25. A method according to any of claims 22 to 24, **characterised in that** it comprises the step of periodically sending messages to each source (3A) which is forwarding said multimedia information to viewers (3B...3Y), to inform the source (3A) of the number of viewers (3B...3Y) connected to it.

26. A method according to any of claims 14 to 25, **characterised in that** communication between the sources (3A) and the server (2) takes place over a first asymmetric data channel carrying in uplink the video signal and in downlink a low rate signalling and control channel, and communication between the server (2) and the viewers (3B...3Y) takes place over a second asymmetrical data channel similar to the first one but operating in opposite direction, the data channels for the video being associated with an audio channel.

## Patentansprüche

1. System zur Bereitstellung von multimedialen Dienstleistungen in Echtzeit, das Folgendes umfasst:
- ein Kommunikationsnetz (1; 10, 11, 12, 13, 14), auf das eine Mehrzahl von Anwendern (3A...3Y) über entsprechende Kommunikationseinheiten zugreifen können;
- einen Server (2), der mit dem besagten Kommunikationsnetz (1; 10, 11, 12, 13, 14) verbunden ist und dafür ausgelegt ist, die Dienste zu verwalten;
- eine Mehrzahl von Quellen von Multimedia-Informationen (3A), die mit dem besagten Kommunikationsnetz (1; 10, 11, 12, 13, 14) verbunden sind und dafür ausgelegt sind, die Multimedia-Informationen, die von ihnen erzeugt werden, an den Server (2) weiterzuleiten;
- eine Mehrzahl von Betrachtern von Multimedia-Informationen (3B...3Y), die eine erste Gruppe von Anwendern bilden, welche mit Kommunikationseinheiten ausgerüstet sind, die Mittel zum Empfangen angeforderter Multimedia-Informationen von dem Server (2) sowie zum Wiedergeben dieser Informationen beinhalten;
- ein Mittel zur Erkennung der Positionen von mindestens einem Teil der Quellen (3A); und
- eine geografische Datenbank (6) zum Speichern von Informationen über diese Positionen, die für den Server (2) zugänglich ist;
**dadurch gekennzeichnet, dass** die besagten Quellen (3A) Mittel zur Erzeugung von Multimedia-Informationen umfassen, die den Kommunikationseinheiten einer zweiten Gruppe von Anwendern zugeordnet sind, wobei mindestens ein Teil der Anwender beiden Gruppen angehört und über Kommunikationseinheiten verfügt, die sowohl mit dem besagten Mittel zum Erzeugen von Multimedia-Signalen als auch mit dem besagten Mittel zum Empfangen und Wiedergeben von Multimedia-Informationen ausgestattet sind, wobei die Anwender dieses Typs wechselweise als Quellen oder als Betrachter fungieren können; sowie **dadurch**, dass die Kommunikationseinheiten der Betrachter dafür ausgelegt sind, mit dem Server verbunden zu werden, um entweder Informationen anzufordern, die von einer bestimmten Quelle erzeugt wurden, oder Informationen, die von den Quellen in einem bestimmten geografischen Gebiet erzeugt wurden, unabhängig von den Positionen der Betrachter.

2. System gemäß Anspruch 1, **dadurch gekennzeichnet, dass** mindestens eine Teilgruppe der Anwender, die als Quellen (3A) fungieren können, mit mobilen Kommunikationseinheiten ausgerüstet ist, und dass Positionsermittlungsmittel vorgesehen sind, um die Position mindestens der Anwender in der besagten Teilgruppe zu ermitteln.

3. System gemäß Anspruch 1 oder Anspruch 2, **dadurch gekennzeichnet, dass** die Positionsermittlungsmittel den Anwendern zugeordnet sind.

4. System gemäß einem der vorstehenden Ansprüche, **dadurch gekennzeichnet, dass** der Server (2) Administrations- und Abrechnungsmittel (25, 26) umfasst, die dafür ausgelegt sind, eine Modus-Anmeldung als eine Quelle bzw. als ein Betrachter zu aktivieren, wenn ein Anwender Zugriff auf den Dienst anfordert, um Multimedia-Signale zu senden bzw. zu empfangen, und die ferner dafür ausgelegt sind, die Beträge zu ermitteln, die solchen Anwendern, die als Quelle fungieren, gutzuschreiben bzw. solchen Anwendern, die als Betrachter fungieren, zu belasten sind.

5. System gemäß einem der vorstehenden Ansprüche, in dem der besagte Server (2) ferner Mittel (23) umfasst, um bei Herstellung einer Verbindung zwischen einem Anwender, der als Quelle (3A) fungiert, und einem Anwender, der als Betrachter (3B...3Y) fungiert, die Zuteilung von Ressourcen auszuhandeln, welche den Eigenschaften der Kommunikationseinheiten der verbundenen Anwender und/oder den Eigenschaften des Netzes (1; 10) entsprechen.

6. System gemäß Anspruch 5, **dadurch gekennzeichnet, dass** die besagten Aushandlungsmittel (23) dafür ausgelegt sind, die Ressourcen in adaptiver Art und Weise zuzuweisen.

7. System gemäß einem der vorstehenden Ansprüche, **dadurch gekennzeichnet, dass** der besagte Server (2) ferner Mittel (24) umfasst, um die Multimedia-Informationen zu speichern, welche von den Quellen weitergeleitet wurden, wobei die besagten Speichermittel auf Anforderung der Quelle, eines oder mehrerer Betrachter(s) oder des Servers aktiviert werden.

8. System gemäß Anspruch 4 und Anspruch 7, **dadurch gekennzeichnet, dass** die besagten Administrations- und Abrechnungsmittel (25, 26) dafür ausgelegt sind, die Beträge zu ermitteln, die Anwendern, welche den Speicher in Anspruch nehmen, gutzuschreiben bzw. zu belasten sind.

9. System gemäß einem der vorstehenden Ansprüche, **dadurch gekennzeichnet, dass** der besagte Server (2) ein Signalisierungsverarbeitungsmittel (22) umfasst, das dafür ausgelegt ist, in einem ersten Betriebs-Modus: Anforderungen des Zugriffs auf den Dienst von Anwendern (3A) zu empfangen, die als Quelle fungieren wollen; Anforderungen des Zugriffs auf den Dienst von Anwendern (3B...3Y) zu empfangen, die als Betrachter fungieren wollen und Multimedia-Informationen von einer bestimmten der besagten Quellen empfangen wollen, unabhängig von der Position des Betrachters; sowie ein Verbindungsherstellungsmittel (24), das dafür ausgelegt ist, eine Verbindung zwischen einem der Anwender, die als Quelle (3A) fungieren, und den betreffenden Betrachtern (3B...3Y) herzustellen.

10. System gemäß Anspruch 9, **dadurch gekennzeichnet, dass** die besagten Administrations- und Abrechnungsmittel (25, 26) dafür ausgelegt sind, sobald der Server (2) eine Zugriffsanforderung von einem Anwender (3A) empfängt, der als Quelle fungieren will, einen Datensatz anzulegen, der dem besagten Anwender zugeordnet ist und mindestens Daten, die die Quelle identifizieren, sowie Informationen zum Inhalt der von dieser Quelle erzeugten Multimedia-Informationen enthält; sowie dafür, die Datensätze, die allen aktiven Quellen zugeordnet sind, den Anwendern (3B...3Y) anzuzeigen, welche Zugriff als Betrachter anfordern, wobei die besagten Datensätze auch Daten zur geografischen Position der aktiven Quellen enthalten können, sofern solche verfügbar sind.

11. System gemäß einem der Ansprüche 1 bis 8, **dadurch gekennzeichnet, dass** der besagte Server (2) ein Signalisierungsverarbeitungsmittel (22) umfasst, das dafür ausgelegt ist, in einem zweiten Betriebs-Modus: Anforderungen des Zugriffs auf den Dienst von Anwendern (3B...3Y) zu empfangen, die als Betrachter fungieren wollen und Multimedia-Informationen von Quellen (3A) empfangen wollen, die sich in einem bestimmten geografischen Gebiet befinden, unabhängig von der Position des Betrachters; den anfordernden Anwendern Datensätze anzuzeigen, die jeweils einer aktiven Quelle (3A) zugeordnet sind und mindestens Informationen zu den Standorten der Quellen sowie zum Inhalt der von den besagten aktiven Quellen (3A) erzeugten Multimedia-Informationen enthalten; sowie ein Verbindungsherstellungsmittel (24), das dafür ausgelegt ist, entweder:
- eine Verbindung zwischen dem/den anfordernden Betrachter (n) (3B...3Y) und der/den Quelle (n) (3A) herzustellen, die in dem Gebiet von Interesse aktiv sind, sofern eine solche aktive Quelle vorhanden ist; oder
- falls in dem betreffenden Gebiet zum Zeitpunkt der Anforderung keine Quelle (3A) aktiv ist, in der besagten geografischen Datenbank (6) nachzuschlagen, ob sich in dem betreffenden Gebiet Anwender aufhalten, die möglicherweise die Funktion der Quelle übernehmen können; besagten Anwendern eine Nachricht zu senden, die sie über das Vorhandensein und die Anzahl von Betrachtern informiert, welche Multimedia-Informationen aus diesem Gebiet empfangen wollen; sowie im Falle, dass einer dieser besagten Anwender als Reaktion auf die empfangene Nachricht als Quelle aktiv wird, die Verbindung zwischen diesem Anwender und den anfordernden Betrachtern (3B...3Y) herzustellen.

12. System gemäß einem der Ansprüche 9 bis 11, **dadurch gekennzeichnet, dass** die besagten Administrationsmittel (25) dafür ausgelegt sind, in regelmäßigen Abständen an eine Quelle (3A), die gerade die besagten Multimedia-Informationen an Betrachter (3B...3Y) weiterleitet, Nachrichten zu senden, die die Quelle über die Anzahl der Betrachter (3B...3Y) informieren, die mit ihr verbunden sind.

13. System gemäß einem der vorstehenden Ansprüche, **dadurch gekennzeichnet, dass** die Verbindungen zwischen den Quellen (3A) und dem Server (2) einen ersten asymmetrischen Datenkanal umfassen, der in der Aufwärtsrichtung die Video-Komponente der Multimedia-Informationen sowie in der Abwärtsrichtung einen Signalisierungs- und Steuerkanal mit niedriger Übertragungsrate transportiert, sowie **dadurch**, dass die Verbindungen zwischen dem Server (2) und den Betrachtern (3B...3Y) einen zweiten asymmetrischen Datenkanal umfassen, der ähnlich dem ersten ist, jedoch in der umgekehrten Richtung arbeitet, wobei den Datenkanälen für Video ein Audio-Kanal zugeordnet ist.

14. Verfahren zur Bereitstellung von multimedialen Dienstleistungen in Echtzeit in einem System, das Folgendes umfasst: ein Kommunikationsnetz (1; 10, 11, 12, 13, 14), auf das eine Mehrzahl von Anwendern (3A...3Y) über entsprechende Kommunikationseinheiten zugreifen können; einen Server (2), der mit dem Netz verbunden ist und die Dienste verwaltet; eine Mehrzahl von Multimedia-Informationsquellen (3A), die mit dem besagten Kommunikationsnetz (1; 10, 11, 12, 13, 14) verbunden sind; sowie eine Mehrzahl von Betrachtern der Multimedia-Informationen (3B...3Y), die mindestens eine Teilgruppe der besagten Anwender bilden, wobei das Verfahren folgende Schritte umfasst:
- Erzeugen von Multimedia-Informationen an einer oder mehreren der besagten Quellen (3A);
- Weiterleiten der von den besagten Quellen (3A) erzeugten Multimedia-Informationen an den Server (2) über das Netz (1; 10, 11, 12, 13, 14);
- Weiterleiten der Multimedia-Informationen von dem Server (2) an einen oder mehrere Betrachter von Multimedia-Informationen (3B...3Y), die diese angefordert haben;
- Wiedergeben der Multimedia-Informationen auf Empfangs-und Wiedergabemitteln der Kommunikationseinheiten der besagten anfordernden Betrachter (3B...3Y);
- Ermitteln der Positionen mindestens eines Teils der Quellen (3A); und
- Speichern der Informationen zu diesen Positionen in einer geografischen Datenbank (6), auf die der Server (2) zugreifen kann,
**dadurch gekennzeichnet, dass** der besagte Schritt des Erzeugens durch die Erzeugungsmittel durchgeführt wird, die den Kommunikationseinheiten der Anwender, welche als die besagten Quellen fungieren können, zugeordnet sind; und **dadurch**, dass die besagten Schritte des Erzeugens und Wiedergebens in den Kommunikationseinheiten von mindestens einer Teilgruppe der Anwender durchgeführt wird, welche in der Lage sind, wechselweise als Quelle oder als Betrachter zu fungieren; sowie **dadurch**, dass der besagte Schritt des Weiterleitens der Informationen vom Server (2) an einen oder mehrere Betrachter von Multimedia-Informationen (3B...3Y), der/die sie angefordert hat/haben, beinhaltet, dass entweder die Informationen, die von einer bestimmten Quelle erzeugt wurden, weitergeleitet werden, oder die Informationen, die von einer Quelle erzeugt wurden, welche sich in einem bestimmten Gebiet befindet, unabhängig von den Positionen der Betrachter.

15. Verfahren gemäß Anspruch 14, **dadurch gekennzeichnet, dass** der besagte Schritt des Ermittelns der Position die Ermittlung der Positionen mindestens derjenigen Anwender beinhaltet, die als Quellen fungieren und mit mobilen Kommunikationseinheiten ausgerüstet sind.

16. Verfahren gemäß Anspruch 14 oder Anspruch 15, **dadurch gekennzeichnet, dass** die besagte Positionsermittlung durch die Kommunikationseinheiten der Anwender erfolgt, die mit mobilen Kommunikationseinheiten ausgerüstet sind.

17. Verfahren gemäß Anspruch 15 oder Anspruch 16, **dadurch gekennzeichnet, dass** es ferner den Schritt umfasst, eine Modus-Anmeldung als Quelle bzw. Betrachter bei dem Dienst für einen Anwender zu aktivieren, der Zugriff auf den Dienst anfordert, um die Multimedia-Informationen zu übertragen bzw. zu empfangen, sowie Beträge zu ermitteln, die Teilnehmern, welche als Quelle (3A) fungieren, gutzuschreiben bzw. Teilnehmern, welche als Betrachter (3B...3Y) fungieren, zu belasten sind.

18. Verfahren gemäß einem der Ansprüche 14 bis 16, **dadurch gekennzeichnet, dass** es ferner eine Aushandlungsphase zu Beginn der Herstellung einer Verbindung zwischen einer Quelle (3A) und dem Server (2) sowie zwischen dem Server (2) und einem Betrachter (3B...3Y) umfasst, um den besagten Verbindungen in einer Art und Weise Ressourcen zuzuweisen, die den Eigenschaften der Kommunikationseinheiten der verbundenen Anwender und/oder den Eigenschaften des Netzes (1; 10) entspricht.

19. Verfahren gemäß Anspruch 18, **dadurch gekennzeichnet, dass** die besagte Aushandlungsphase eine adaptive Zuteilung von Ressourcen zu den besagten Verbindungen bestimmt.

20. Verfahren gemäß einem der Ansprüche 14 bis 19, **dadurch gekennzeichnet, dass** es ferner den Schritt umfasst, die von einer oder mehreren Quelle(n) (3A) weitergeleiteten Multimedia-Informationen auf Anforderung der Quelle (3A), eines oder mehrerer Betrachter (s) (3B...3Y) oder des Servers (2) in einem Langzeit-Speicher (24) zu speichern.

21. Verfahren gemäß Anspruch 20, **dadurch gekennzeichnet, dass** der besagte Schritt des Speicherns die Ermittlung von Beträgen beinhaltet, die den Anwendern (3A...3Y) für die besagte Speicherung gutzuschreiben bzw. zu belasten sind.

22. Verfahren gemäß einem der Ansprüche 14 bis 21, **dadurch gekennzeichnet, dass** es in einem ersten Betriebs-Modus folgende Schritte umfasst: Empfangen von Anforderungen des Zugriffs auf den Dienst von Anwendern, die als Quelle (3A) fungieren wollen; Empfangen von Anforderungen des Zugriffs auf den Dienst von Anwendern, die als Betrachter (3B...3Y) fungieren wollen, um Multimedia-Informationen von einer bestimmten der besagten Quellen (3A) zu empfangen, am Server (2); und Herstellen einer Verbindung zwischen der besagten bestimmten Quelle (3A) und den interessierten Betrachtern (3B...3Y).

23. Verfahren gemäß Anspruch 22, **dadurch gekennzeichnet, dass** es bei Empfang einer Anforderung des Zugriffs auf den Dienst von einer Quelle (3A) folgende Schritte umfasst: Erstellen eines Datensatzes, der der besagten Quelle (3A) zugeordnet ist und der mindestens Daten zur Identifizierung der Quelle (3A) sowie Informationen zum Inhalt der von dieser erzeugten Multimedia-Informationen enthält, sowie Anzeigen der Datensätze zu allen aktiven Quellen (3A) für alle Anwender (3B...3Y), die Zugriff als Betrachter anfordern, wobei der Datensatz gegebenenfalls auch Daten zu den geografischen Positionen der aktiven Quellen enthalten kann, sofern solche zur Verfügung stehen.

24. Verfahren gemäß einem der Ansprüche 14 bis 21, **dadurch gekennzeichnet, dass** es in einem zweiten Betriebs-Modus folgende Schritte umfasst: Empfangen von Anforderungen des Zugriffs auf den Dienst von Anwendern, die als Betrachter (3B...3Y) fungieren wollen und die Multimedia-Informationen von Quellen (3A), die sich in einem bestimmten geografischen Gebiet befinden, empfangen wollen; Bereitstellen eines Verzeichnisses der aktiven Quellen (3A) für die anfordernden Anwender (3B...3Y), welches mindestens Informationen zu den Positionen der Quellen und zum Inhalt der von den besagten aktiven Quellen (3A) erzeugten Multimedia-Informationen enthält; sowie entweder
- Herstellen einer Verbindung zwischen dem/den anfordernden Anwender (n) (3B...3Y) und der/den Quelle (n) (3A), die in dem Gebiet von Interesse aktiv sind, sofern eine solche aktive Quelle vorhanden ist; oder
- falls in dem betreffenden Gebiet zum Zeitpunkt der Anforderung keine Quelle (3A) aktiv ist, Nachschlagen in der besagten geografischen Datenbank (6), ob sich in dem betreffenden Gebiet Anwender aufhalten, die möglicherweise die Funktion der Quelle (3A) übernehmen können; Senden einer Nachricht an die besagten Anwender, die sie über das Vorhandensein und die Anzahl von Betrachtern informiert, welche Multimedia-Informationen aus diesem Gebiet empfangen wollen; sowie im Falle, dass einer dieser besagten Anwender als Reaktion auf die empfangene Nachricht als Quelle (3A) aktiv wird, Herstellen der Verbindung zwischen diesem Anwender und den anfordernden Betrachtern (3B...3Y).

25. Verfahren gemäß einem der Ansprüche 22 bis 24, **dadurch gekennzeichnet, dass** es den Schritt umfasst, in regelmäßigen Abständen an jede der Quellen (3A), die die besagten Multimedia-Informationen an Betrachter (3B...3Y) weiterleiten, Nachrichten zu senden, die die Quelle (3A) über die Anzahl der mit ihr verbundenen Anwender (3B...3Y) informieren.

26. Verfahren gemäß einem der Ansprüche 14 bis 25, **dadurch gekennzeichnet, dass** die Kommunikation zwischen den Quellen (3A) und dem Server (2) über einen ersten asymmetrischen Datenkanal erfolgt, der in der Aufwärtsrichtung das Video-Signal sowie in der Abwärtsrichtung einen Signalisierungs- und Steuerkanal mit niedriger Übertragungsrate transportiert, und **dadurch**, dass die Kommunikation zwischen dem Server (2) und den Betrachtern (3B...3Y) über einen zweiten asymmetrischen Datenkanal verläuft, der ähnlich dem ersten ist, jedoch in der umgekehrten Richtung arbeitet, wobei den Datenkanälen für Video ein Audio-Kanal zugeordnet ist.

## Revendications

1. Système pour fournir des services multimédias en direct, comprenant :
- un réseau de communication (1 ; 10, 11, 12, 13, 14) auquel une pluralité d'utilisateurs (3A, ..., 3Y) ont accès au moyen d'appareils de communication respectifs ;
- un serveur (2) relié audit réseau de communication (1 ; 10, 11, 12, 13, 14) et conçu pour gérer les services ;
- une pluralité de sources d'informations multimédias (3A) reliées audit réseau de communication (1 ; 10, 11, 12, 13, 14) et conçues pour expédier les informations multimédias qu'elles produisent, au serveur (2) ;
- une pluralité de téléspectateurs d'informations multimédias (3B, ..., 3Y), qui sont un premier groupe d'utilisateurs équipés d'appareils de communication comportant des moyens pour recevoir du serveur (2) et lire les informations multimédias demandées ;
- des moyens pour détecter les positions d'au moins une partie des sources (3A), et
- une base de données géographiques (6) pour stocker des informations sur de telles positions et accessible au serveur (2) ;
**caractérisé en ce que** lesdites sources (3A) comprennent des moyens de production d'informations multimédias associés aux appareils de communication d'un second groupe d'utilisateurs, au moins une partie des utilisateurs appartenant aux deux groupes et ayant des appareils de communication comportant à la fois lesdits moyens de production de signaux multimédias et lesdits moyens de réception et de lecture des informations multimédias, de tels utilisateurs pouvant agir en tant que sources ou que téléspectateurs de manière interchangeable, et **en ce que** les appareils de communication des téléspectateurs sont conçus pour être connectés au serveur pour demander soit des informations produites par une source spécifique, soit des informations produites par des sources dans une zone géographique spécifique, indépendamment des positions des téléspectateurs.

2. Système selon la revendication 1, **caractérisé en ce que** au moins un sous-ensemble des utilisateurs capables d'agir en tant que sources (3A) est équipé d'appareils de communication mobiles et **en ce que** les moyens de détection de la position sont conçus pour détecter la position d'au moins les utilisateurs dudit sous-ensemble.

3. Système selon la revendication 1 ou 2, **caractérisé en ce que** les moyens de détection de la position sont associés aux utilisateurs.

4. Système selon l'une quelconque des revendications précédentes, **caractérisé en ce que** le serveur (2) comprend des moyens d'administration et de comptabilité (25, 26) conçus pour activer une inscription au mode en tant que, respectivement, source ou téléspectateur pour un utilisateur demandant l'accès au service en vue, respectivement, de transmettre ou de recevoir les signaux multimédias, et conçus pour déterminer les montants à créditer aux utilisateurs agissant en tant que sources et à débiter aux utilisateurs agissant en tant que téléspectateurs.

5. Système selon l'une quelconque des revendications précédentes, dans lequel ledit serveur (2) comprend par ailleurs des moyens (23) pour négocier, à l'établissement d'une connexion entre un utilisateur agissant en tant que source (3A) et un utilisateur agissant en tant que téléspectateur (3B, ..., 3Y), l'attribution de ressources compatibles avec les caractéristiques des appareils de communication des utilisateurs connectés et/ou les caractéristiques du réseau (1 ; 10).

6. Système selon la revendication 5, **caractérisé en ce que** lesdits moyens de négociation (23) sont conçus pour attribuer les ressources de manière adaptative.

7. Système selon l'une quelconque des revendications précédentes, **caractérisé en ce que** ledit serveur (2) comprend par ailleurs des moyens (24) pour stocker les informations multimédias expédiées par les sources, lesdits moyens de stockage étant activés à la demande de la source, d'un ou de plusieurs téléspectateurs ou du serveur.

8. Système selon les revendications 4 et 7, **caractérisé en ce que** lesdits moyens d'administration et de comptabilité (25, 26) sont conçus pour déterminer les montants dont doivent être crédités ou débités les utilisateurs pour le stockage.

9. Système selon l'une quelconque des revendications précédentes, **caractérisé en ce que** ledit serveur (2) comprend des moyens de traitement de signalisation (22) conçus, dans un premier mode d'exploitation : pour recevoir des demandes d'accès au service par des utilisateurs (3A) ayant l'intention d'agir en tant que sources ; pour recevoir des demandes d'accès au service par des utilisateurs (3B, ..., 3Y) ayant l'intention d'agir en tant que téléspectateurs et souhaitant recevoir des informations multimédias d'une source spécifiée parmi lesdites sources, indépendamment de la position des téléspectateurs ; et des moyens de connexion (24) conçus pour établir une connexion entre l'un quelconque desdits utilisateurs agissant en tant que sources (3A) et les téléspectateurs concernés (3B, ..., 3Y).

10. Système selon la revendication 9, **caractérisé en ce que** lesdits moyens d'administration et de comptabilité (25, 26) sont conçus, lorsque le serveur (2) reçoit une demande d'accès d'un utilisateur (3A) ayant l'intention d'agir en tant que source, pour préparer un article associé audit utilisateur et contenant au moins des données identifiant la source et des informations sur le contenu des informations multimédias produites par ladite source ; et pour présenter les articles associés à toutes les sources actives aux utilisateurs (3B, ..., 3Y) demandant un accès en tant que téléspectateurs, lesdits articles comprenant aussi des données sur les positions géographiques des sources actives, si elles sont disponibles.

11. Système selon l'une quelconque des revendications 1 à 8, **caractérisé en ce que** ledit serveur (2) comprend des moyens de traitement de signalisation (22) conçus, dans un second mode d'exploitation : pour recevoir des demandes d'accès au service par des utilisateurs (3B, ..., 3Y) ayant l'intention d'agir en tant que téléspectateurs et souhaitant recevoir des informations multimédias de sources (3A) situées dans une zone géographique spécifiée, indépendamment de la position des téléspectateurs ; pour fournir aux utilisateurs le demandant des articles associés chacun à une source active (3A) et contenant au moins des informations sur les positions de sources et sur le contenu des informations multimédias produites par lesdites sources actives (3A) ; et des moyens de connexion (24) conçus pour :
- soit établir une connexion entre le(s) téléspectateur(s) (3B, ..., 3Y) le demandant et la ou les sources (3A) active (s) dans la zone la ou les intéressant, s'il existe une source active ;
- soit, si aucune source (3A) n'est active dans la zone au moment de la demande, chercher dans ladite base de données géographiques (6) la présence dans cette zone d'utilisateurs potentiellement capables d'agir en tant que sources ; envoyer auxdits utilisateurs un message les informant de l'existence et du nombre de téléspectateurs souhaitant recevoir des informations multimédias de cette zone, et dans le cas où l'un quelconque desdits utilisateurs devient actif en tant que source en réaction au message reçu, établir la connexion entre cet utilisateur et les téléspectateurs (3B, ..., 3Y) le demandant.

12. Système selon l'une quelconque des revendications 9 à 11, **caractérisé en ce que** lesdits moyens d'administration (25) sont conçus pour envoyer périodiquement à une source (3A), pendant qu'elle expédie lesdites informations multimédias à des téléspectateurs (3B, ..., 3Y), des messages informant la source du nombre de téléspectateurs (3B, ..., 3Y) qui y sont connectés.

13. Système selon l'une quelconque des revendications précédentes, **caractérisé en ce que** les connexions entre les sources (3A) et le serveur (2) comprennent une première voie de données asymétrique transportant vers l'amont la composante vidéo des informations multimédias et vers l'aval une voie de signalisation et de commande à bas débit, et les connexions entre le serveur (2) et les téléspectateurs (3B, ..., 3Y) comprennent une seconde voie de données asymétrique similaire à la première, mais fonctionnant dans la direction opposée, les voies de données pour la vidéo étant associées à une voie audio.

14. Procédé de fourniture de services multimédias en direct dans un système comprenant : un réseau de communication (1 ; 10, 11, 12, 13, 14) auquel une pluralité d'utilisateurs (3A, ..., 3Y) ont accès au moyen d'appareils de communication respectifs ; un serveur (2) relié au réseau et gérant les services ; une pluralité de sources d'informations multimédias (3A) reliées audit réseau de communication (1 ; 10, 11, 12, 13, 14), et une pluralité de téléspectateurs d'informations multimédias (3B, ..., 3Y) qui forment au moins une partie desdits utilisateurs, le procédé comprenant les étapes consistant à :
- produire des informations multimédias au niveau d'une ou de plusieurs desdites sources (3A) ;
- expédier les informations multimédias produites par lesdites sources (3A) au serveur (2) par l'intermédiaire du réseau (1 ; 10, 11, 12, 13, 14) ;
- expédier les informations multimédias du serveur (2) à un ou plusieurs téléspectateurs d'informations multimédias (3B, ..., 3Y) l'ayant demandé ;
- lire les informations multimédias sur les moyens de réception et de lecture des appareils de communication desdits téléspectateurs (3B, ..., 3Y) demandeurs ;
- détecter les positions d'au moins une partie des sources (3A), et
- stocker les informations sur de telles positions dans une base de données géographiques (6) accessible au serveur (2),
**caractérisé en ce que** ladite étape de production est réalisée par des moyens de production associés aux appareils de communication d'utilisateurs capables d'agir en tant que sources, **en ce que** lesdites étapes de production et de lecture peuvent être exécutées au niveau des appareils de communication d'au moins une série d'utilisateurs qui sont capables d'agir de manière interchangeable en tant que sources ou que téléspectateurs, et **en ce que** ladite étape d'expédition des informations du serveur (2) à un ou plusieurs téléspectateurs d'informations multimédias (3B, ..., 3Y) l'ayant demandé consiste soit à expédier des informations produites par une source spécifique, soit à expédier des informations produites par une source située dans une zone spécifique, indépendamment des positions des téléspectateurs.

15. Procédé selon la revendication 14, **caractérisé en ce que** ladite étape de détection consiste à détecter la position d'au moins les utilisateurs agissant en tant que sources et équipés d'appareils de communication mobiles.

16. Procédé selon la revendication 14 ou 15, **caractérisé en ce que** ladite détection de position est exécutée par les appareils de communication d'utilisateurs équipés d'appareils de communication mobiles.

17. Procédé selon la revendication 15 ou 16, **caractérisé en ce qu'**il comprend par ailleurs l'étape consistant à activer une inscription modale au service en tant que, respectivement, source ou téléspectateur pour un utilisateur demandant l'accès au service en vue de, respectivement, transmettre ou recevoir les informations multimédias, et à déterminer les montants dont doivent être crédités les inscrits agissant en tant que sources (3A) et débités les inscrits agissant en tant que téléspectateurs (3B, ..., 3Y).

18. Procédé selon l'une quelconque des revendications 14 à 16, **caractérisé en ce qu'**il comprend par ailleurs une phase de négociation, à l'établissement d'une connexion entre une source (3A) et le serveur (2) et entre le serveur (2) et un téléspectateur (3B, ..., 3Y), pour attribuer des ressources auxdites connexions d'une manière compatible avec les caractéristiques des appareils de communication des utilisateurs connectés et/ou avec les caractéristiques du réseau (1 ; 10) .

19. Procédé selon la revendication 18, **caractérisé en ce que** ladite phase de négociation détermine une attribution adaptative de ressources auxdites connexions.

20. Procédé selon l'une quelconque des revendications 14 à 19, **caractérisé en ce qu'**il comprend par ailleurs l'étape consistant à stocker les informations multimédias expédiées par une ou plusieurs sources (3A) dans une mémoire à long terme (24), à la demande de la source (3A), d'un ou de plusieurs téléspectateurs (3B, ..., 3Y) ou du serveur (2).

21. Procédé selon la revendication 20, **caractérisé en ce que** ladite étape de stockage comprend la détermination de montants dont doivent être crédités ou débités les utilisateurs (3A, ..., 3Y) pour ledit stockage.

22. Procédé selon l'une quelconque des revendications 14 à 21, **caractérisé en ce qu'**il comprend, dans un premier mode d'exploitation, les étapes consistant à : recevoir des demandes d'accès au service par des utilisateurs ayant l'intention d'agir en tant que sources (3A); recevoir, au niveau du serveur (2), des demandes d'accès au service par des utilisateurs ayant l'intention d'agir en tant que téléspectateurs (3B, ..., 3Y) afin de recevoir des informations multimédias d'une source spécifiée parmi lesdites sources (3A), et établir une connexion entre ladite source spécifiée (3A) et les téléspectateurs (3B, ..., 3Y) intéressés.

23. Procédé selon la revendication 22, **caractérisé en ce que**, à la réception d'une demande d'accès au service par une source (3A), il comprend les étapes consistant à : préparer un article associé à ladite source (3A) et contenant au moins des données identifiant la source (3A) et des informations sur le contenu des informations multimédias produites par elle, et présenter les articles associés à toutes les sources actives (3A) à tous les utilisateurs (3B, ..., 3Y) demandant l'accès en tant que téléspectateurs, l'article comprenant aussi des données sur les positions géographiques des sources actives, s'il y en a.

24. Procédé selon l'une quelconque des revendications 14 à 21, **caractérisé en ce qu'**il comprend, dans un second mode d'exploitation, les étapes consistant à : recevoir des demandes d'accès au service par les utilisateurs ayant l'intention d'agir en tant que téléspectateurs (3B, ..., 3Y)et souhaitant recevoir des informations multimédias de sources (3A) situées dans une zone géographique spécifiée ; fournir aux utilisateurs (3B, ..., 3Y) le demandant un répertoire des sources (3A) actives contenant au moins des informations sur les positions des sources et sur le contenu des informations multimédias produites par lesdites sources (3A) actives, et
- soit établir une connexion entre le(s) téléspectateur(s) (3B, ..., 3Y) le demandant et la ou les sources (3A) actives dans la zone le ou les intéressant, s'il existe une quelconque telle source active ;
- soit, si aucune source (3A) n'est active dans la zone au moment de la demande, chercher dans la base de données géographiques (6) la présence dans cette zone d'utilisateurs potentiellement capables d'agir en tant que sources (3A) ; envoyer auxdits utilisateurs un message les informant de l'existence et du nombre de téléspectateurs souhaitant recevoir des informations multimédias de cette zone, et dans le cas où l'un quelconque desdits utilisateurs devient actif comme source (3A) en réaction au message reçu, établir la connexion entre cet utilisateur et les téléspectateurs (3B, ..., 3Y) le demandant.

25. Procédé selon l'une quelconque des revendications 22 à 24, **caractérisé en ce qu'**il comprend l'étape consistant à envoyer périodiquement des messages à chaque source (3A) qui expédie lesdites informations multimédias à des téléspectateurs (3B, ..., 3Y), pour informer la source (3A) du nombre de téléspectateurs (3B, ..., 3Y) qui y sont connectés.

26. Procédé selon l'une quelconque des revendications 14 à 25, **caractérisé en ce que** la communication entre les sources (3A) et le serveur (2) se déroule sur une première voie de données asymétrique transportant vers l'amont le signal vidéo et vers l'aval une voie de signalisation et de commande à faible débit, et **en ce que** la communication entre le serveur (2) et les téléspectateurs (3B, ..., 3Y) se déroule sur une seconde voie de données asymétrique similaire à la première, mais fonctionnant dans la direction opposée, les voies de données pour la vidéo étant associées à une voie audio.
